# EUROPEAN PATENT APPLICATION

(11) **EP 3 413 659 A1**
(43) Date of publication of application: **12.12.2018**
(21) Application number: 17747553.0
(22) Date of filing: 03.02.2017
(51) Int. Cl.: H04W 72/04, H04W 16/32, H04W 56/00

(54) **WIRELESS COMMUNICATION DEVICE, AND WIRELESS COMMUNICATION METHOD**

(30) Priority: 04.02.2016 JP 2016019794
(71) Applicant: NTT DOCOMO, INC., Chiyoda-ku Tokyo 100-6150 (JP)
(72) Inventor: UCHINO, Tooru, Tokyo 100-6150 (JP); TESHIMA, Kunihiko, Tokyo 100-6150 (JP); TAKEDA, Kazuki, Tokyo 100-6150 (JP)
(74) Representative: Hoffmann Eitle
(86) International application number: PCT/JP2017/003948
(87) International publication number: WO 2017/135402

(57) **Abstract**

One object is to provide a radio communication device and a radio communication method that are capable of stopping transmission of a radio link more appropriately if a transmission timing difference of component carrier (CC) between MCG and SCG exceeds a predetermined value, when Dual Connectivity (DC) is applied. UE (100) includes a timing difference detecting unit (120) that detects a transmission timing difference between a plurality of the component carriers, and a transmission controlling unit (130) that determines, based on states of a cell belonging to a master cell group and a cell belonging to a secondary cell group, a cell to which transmission is to be stopped if the transmission timing difference detected by the timing difference detecting unit (120) exceeds a predetermined value, and stops transmission of a radio link to the determined cell.

## Description

### TECHNICAL FIELD

The present invention relates to a radio communication device and a radio communication method that perform radio communication by using a plurality of component carriers via a cell belonging to a master cell group and a cell belonging to a secondary cell group.

### BACKGROUND ART

3rd Generation Partnership Project (3GPP) specifies Long Term Evolution (LTE), and with the aim of further speeding, specifies the LTE including LTE-Advanced (hereinbelow, the LTE includes the LTE-Advanced).

Carrier aggregation (CA) that increases the communication capacity by simultaneously transmitting a plurality of component carriers (CC) is stipulated in the LTE. In the CA, when a user device (UE) simultaneously transmits a plurality of the CCs, a transmission timing difference and a reception timing difference between the CCs that must be maintained by the UE are stipulated such that the link between the CCs can be established, and a round trip time (RTT) stipulated in the conventional MAC (Medium Access Control) layer can be followed (refer to Non-Patent Document 1).

In the CA, it is stipulated that if the transmission timing difference between the CCs in the UE exceeds a predetermined value (32.47 µs), the UE can stop an uplink (UL) transmission in a secondary cell (SCell), in other words, stop the transmission of the CC (refer to Non-Patent Document 2). Specifically, the UE stops TA (Time Alignment) timer of the SCell to stop the UL transmission in the SCell. Because the UE can transmit only RA (Random Access) preamble to a cell of which the TA timer is not activated, unless TA command is received again via RA procedure, the UL transmission remains stopped.

Furthermore, in Dual Connectivity (DC) in which the UE performs radio communication with two radio base stations (eNB), namely, a master radio base station (MeNB) and a secondary radio base station (SeNB), similar to the CA, a transmission timing difference and a reception timing difference between the CCs that must be maintained by the UE are stipulated.

Specifically, in the DC, a transmission timing difference and a reception timing difference between the CCs of different cell groups, specifically, between the CC of a master cell group (MCG) and the CC of a secondary cell group (SCG) are stipulated. Furthermore, the transmission timing difference and the reception timing difference between the CCs of the same cell group are the same as that of stipulated in the CA.

Moreover, even in the DC, stopping of UL transmission in the SCG if the transmission timing difference between the CCs of different cell groups in the UE, in other words, between the CC belonging to the MCG and the CC belonging to the SCG exceeds a predetermined value (35.21 µs) is being studied (refer to Non-Patent Document 3).

### PRIOR ART DOCUMENT

### NON-PATENT DOCUMENT

[Non-Patent Document 1]: 3GPP TS 36.300 V13.2.0 Annex J (informative): Carrier Aggregation, 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 13), 3GPP, December 2015
[Non-Patent Document 2]: 3GPP TS 36.321 V13.0.0 Section 5.2 Maintenance of Uplink Time Alignment, 3rd Generation Partnership Project; Technical Specification Group Radio Access Network; Evolved Universal Terrestrial Radio Access (E-UTRA); Medium Access Control (MAC) protocol specification (Release 13), 3GPP, December 2015
[Non-Patent Document 3]: 3GPP R4-158409, LS on maximum UL Transmission timing difference in dual connectivity, 3GPP, November 2015

### SUMMARY OF THE INVENTION

However, stopping UL transmission in the Dual Connectivity (DC) discussed above involves the following problems. Specifically, in the DC, a primary cell (PCell) and a secondary cell (SCell) can be set in the MCG, and a primary SCell (PSCell) and the SCell can be set in the SCG.

Therefore, when the transmission timing difference in the UE between the CCs of different cell groups exceeds a predetermined value, the UL transmission to the PSCell, and the SCell belonging to the SCG is stopped. In other words, even if the transmission timing difference between the specific cells (for example, between the PCell and the PSCell) is below the predetermined value, there is a problem that all UL transmission in the SCG is stopped.

The present invention has been made in view of the above circumstances. It is an object of the present invention to provide a radio communication device and a radio communication method that can stop transmission of a radio link more appropriately if a transmission timing difference of component carrier (CC) between the MCG and the SCG exceeds a predetermined value, when the Dual Connectivity (DC) is applied.

According to one aspect of the present invention, a radio communication device performs radio communication by using a plurality of component carriers via a cell belonging to a master cell group and a cell belonging to a secondary cell group. The radio communication device includes a timing difference detecting unit that detects a transmission timing difference between the plurality of the component carriers; and a transmission controlling unit that determines, based on states of the cell belonging to the master cell group and the cell belonging to the secondary cell group, a cell to which transmission is to be stopped if the transmission timing difference detected by the timing difference detecting unit exceeds a predetermined value, and stops transmission of a radio link to the determined cell.

According to another aspect of the present invention, a radio communication method is implemented by a radio communication device that performs radio communication by using a plurality of component carriers via a cell belonging to a master cell group and a cell belonging to a secondary cell group. The radio communication method includes detecting including a radio communication device detecting a transmission timing difference between the plurality of the component carriers; determining including the radio communication device determining, based on states of the cell belonging to the master cell group and the cell belonging to the secondary cell group, a cell to which transmission is to be stopped when the transmission timing difference detected at the detecting exceeds a predetermined value; and stopping including the radio communication device stopping transmission of a radio link to the determined cell.

### BRIEF DESCRIPTION OF DRAWINGS

FIG. 1 is an overall structural diagram of a radio communication system 10.
FIG. 2 is a functional block diagram of UE 100.
FIG. 3 is a diagram showing an example of a transmission timing difference between component carriers (CC) transmitted by the UE 100.
FIG. 4 shows a flow of operations performed by the UE 100 to stop uplink (UL) transmission.
FIG. 5 is a functional block diagram of UE 100A according to the other embodiment.

### MODES FOR CARRYING OUT THE INVENTION

Exemplary embodiments are explained below with reference to the accompanying drawings. In the drawings, structural elements having the same function or configuration are indicated by the same or similar reference numerals and the explanation thereof is appropriately omitted.

### (1) Overall structural configuration of radio communication system

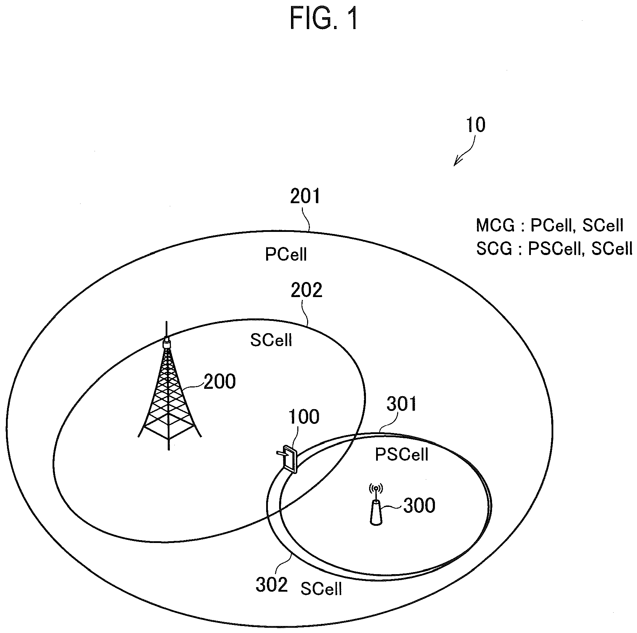

FIG. 1 is an overall structural diagram of a radio communication system 10 according to the present embodiment. The radio communication system 10 is a radio communication system in accordance with the Long Term Evolution (LTE), and includes a user device 100 (hereinafter, "UE 100"), Master eNB 200 (hereinafter, "MeNB 200"), and Secondary eNB 300 (hereinafter, "SeNB 300").

The MeNB 200 and the SeNB 300 are connected to a radio access network, specifically, to Evolved Universal Terrestrial Radio Access Network (E-UTRAN) stipulated in the 3GPP. The radio communication system 10 is not necessarily limited to the LTE (E-UTRAN). For example, a radio access network that constitutes the radio communication system 10 can be a radio access network that includes a radio base station (eNB) that performs radio communication with the user device (UE) defined as 5G, or can be a different radio access technology (RAT) such as wireless LAN.

The UE 100, the MeNB 200, and the SeNB 300 perform radio communication in accordance with the specification of the LTE. Particularly, in the present embodiment, the UE 100, the MeNB 200, and the SeNB 300 support the Dual Connectivity (DC) .

In the DC, the UE 100 performs radio communication with two radio base stations (eNB), namely, the MeNB 200 and the SeNB 300. More specifically, the DC is a state in which the UE 100 in RRC_CONNECTED state is connected to a master cell group (MCG) and a secondary cell group (SCG).

In other words, the UE 100, the MeNB 200, and the SeNB 300 are radio communication devices that perform radio communication by using a plurality of component carriers (CC) via a cell belonging to the MCG and a cell belonging to the SCG.

The MCG, in the Dual Connectivity, is a group of serving cells related to the MeNB 200, and is constituted by one primary cell (PCell) and one or more secondary cells (SCell) that can be set in addition to the PCell. The SCG, in the Dual Connectivity, is a group of serving cells related to the SeNB 300, and is constituted by one primary SCell (PSCell) and one or more secondary cells (SCell) that can be set in addition to the PSCell.

In the present embodiment, the MCG is constituted by PCell 201 and SCell 202. Moreover, the SCG is constituted by PSCell 301 and SCell 302.

The MeNB 200 is a master radio base station in the Dual Connectivity, and is operative to terminate at least S1-MME interface. The SeNB 300 is a secondary radio base station in the Dual Connectivity, and is a radio base station that is not a master radio base station that provides additional radio resources to the UE 100.

### (2) Functional block configuration of radio communication system

A functional block configuration of the radio communication system 10 is explained below. Specifically, a functional block configuration of the UE 100 is explained below.

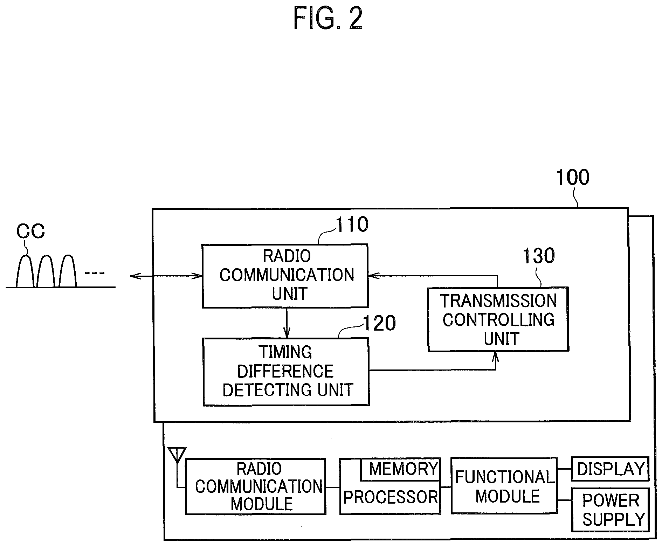

FIG. 2 is a functional block diagram of the UE 100. As shown in FIG. 2, the UE 100 includes a radio communication unit 110, a timing difference detecting unit 120, and a transmission controlling unit 130.

Furthermore, as shown in FIG. 2, each functional block of the UE 100 is implemented by hardware elements such as a radio communication module, a processor (including a memory), a functional module (external connection IF, position detection, various measurements, and the like), and a power supply (such as a battery).

The radio communication unit 110 performs radio communication in accordance with the LTE. Specifically, the radio communication unit 110 can transmit and receive a plurality of the component carriers (CCs), and supports the carrier aggregation (CA) and the Dual Connectivity (DC).

The timing difference detecting unit 120 detects a transmission timing difference between the plurality of the CCs transmitted and received by the radio communication unit 110. Specifically, the timing difference detecting unit 120 detects the transmission timing difference (time difference) between the CCs for each combination of the CCs transmitted by the radio communication unit 110. Moreover, the timing difference detecting unit 120 detects reception timing difference (time difference) between the CCs that the radio communication unit 110 receives from the MeNB 200 or the SeNB 300.

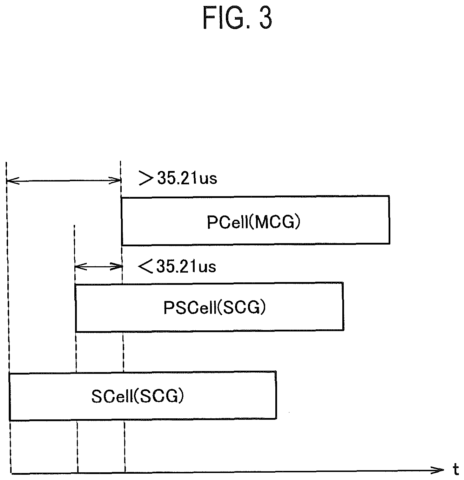

FIG. 3 shows an example of a transmission timing difference between the component carriers (CC) transmitted by the UE 100. As shown in FIG. 3, the UE 100 supports the Dual Connectivity, and can simultaneously transmit a plurality of the CCs to the PCell belonging to the MCG, and the PSCell and the SCell belonging to the SCG.

In the state shown in FIG. 3, even though the transmission timing difference of the uplink (UL), specifically, the CC between the PCell and the PSCell is below a predetermined value (35.21 µs), the UL transmission timing difference between the PCell and the SCell exceeds the predetermined value. In such a case, it is desirable to continue the communication with the PCell and the PSCell.

In the present embodiment, when the transmission timing difference shown in FIG. 3 occurs, a state in which the UL transmission to all SCells including the PSCell is stopped is avoided, and the UL transmission is stopped only for the SCell of the SCG, or a cell to which the UL transmission is to be stopped is flexibly determined depending on the state of each cell.

The transmission controlling unit 130 controls the uplink (UL) transmission based on the transmission timing difference between the CCs detected by the timing difference detecting unit 120.

Specifically, if the transmission timing difference detected by the timing difference detecting unit 120 exceeds the predetermined value (35.21 µs), the transmission controlling unit 130 determines, based on the states of the cell belonging to the MCG and the cell belonging to the SCG, a cell to which the transmission is to be stopped. Moreover, the transmission controlling unit 130 stops the transmission of a radio link, specifically, the uplink (UL) to the determined cell.

Alternatively, if the transmission timing difference detected by the timing difference detecting unit 120 exceeds the predetermined value, the transmission controlling unit 130 can halt the application of the received TA command.

Furthermore, the predetermined value can be a value (35.21 µs) stipulated in advance as explained above, or the predetermined value can be a value (performance value) derived in accordance with the capacity of the UE 100 to support the transmission timing difference during the implementation.

### (3) Operation of radio communication system

An operation of the radio communication system 10 is explained below. Specifically, the operation in which the UE 100 stops the uplink (UL) transmission based on the transmission timing difference of the component carrier (CC) is explained.

### (3.1) Overall operation flow

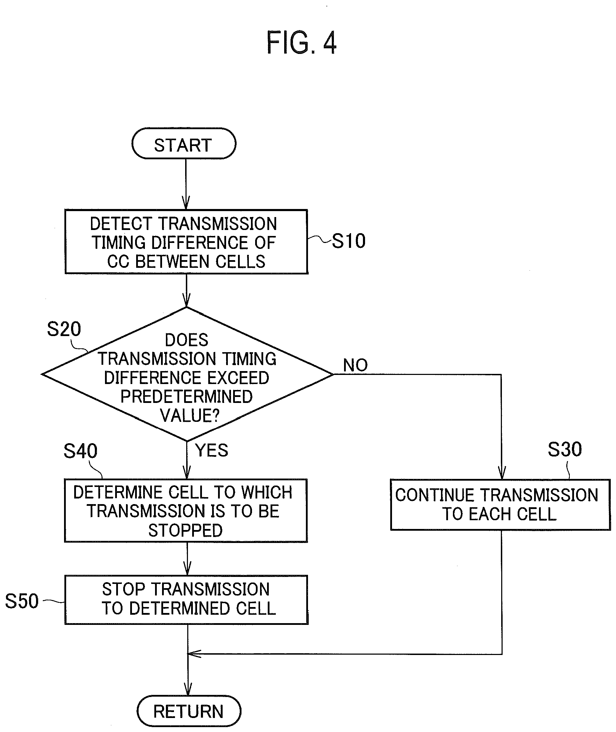

FIG. 4 shows a flow of operations performed by the UE 100 to stop the uplink (UL) transmission. As shown in FIG. 4, the UE 100 detects transmission timing differences between the CCs transmitted to various cells, specifically, to the PCell 201, the SCell 202, the PSCell 301, and the SCell 302 as shown in FIG. 1 (S10).

In other words, the four patterns of the transmission timing difference are as follows:

(i) Transmission timing difference between the PCell 201 and the PSCell 301
(ii) Transmission timing difference between the PCell 201 and the SCell 302 (SCell of SCG)
(iii) Transmission timing difference between the SCell 202 (SCell of MCG) and the PSCell 301
(iv) Transmission timing difference between the SCell 202 and the SCell 302

The UE 100 determines whether the detected transmission timing difference exceeds the predetermined value or not (S20) . Specifically, the UE 100 determines whether the transmission timing difference between the cells for each combination of the cells explained above exceeds the predetermined value, for example, 35.21 µs, or the performance value of the UE 100 or not.

If the transmission timing difference is below the predetermined value (or the performance value of the UE 100), the UE 100 continues the UL transmission, in other words, the transmission of the CC in each cell (S30).

On the other hand, if the transmission timing difference exceeds the predetermined value (or the performance value of the UE 100), the UE 100 determines a cell to which the UL transmission is to be stopped (S40). The method of determining a cell to which the UL transmission is to be stopped will be explained later.

The UE 100 stops the UL transmission to the cell to which it has been determined to stop the UL transmission (S50) . The method to stop the transmission of the UL will also be described in detail later.

### (3.2) Detailed operation examples

An operation performed to determine a cell to which the UL transmission is to be stopped if the transmission timing difference exceeds the predetermined value (or the performance value of the UE 100, hereinafter the same) is explained below.

Specifically, a cell to which the UL transmission is to be stopped is determined based on the state of each cell or the combination of cells explained above and the like. Operation examples 1 to 15 are explained below. However, as long as execution conditions of the operation are fulfilled, any operation can be executed.

Moreover, in the present embodiment, synchronous-type Dual Connectivity (DC) is assumed, and the predetermined value of the transmission timing difference in the UE 100 is below 35.21 µs as explained above.

### (3.2.1) Operation example 1

The UE 100 (specifically, the transmission controlling unit 130, hereinafter the same) determines the SCell belonging to the MCG and / or the SCell belonging to the SCG as a cell to which transmission is to be stopped.

In other words, the UE 100 stops the UL transmission to a SCell that is not the PCell and the PSCell. According to the present operation example, communication of the important cells such as the PCell and the PSCell is not hindered.

### (3.2.2) Operation example 2

The UE 100 determines a SCell in which an uplink control channel, specifically, PUCCH is not set as a cell to which transmission is to be stopped.

In other words, the UE 100 stops the UL transmission to the SCell for which the PUCCH is not set. The operation is similar to that of the operation example 1, but in Release-13 LTE, it is considered that the PUCCH can be set even in cells other than the PCell and the PSCell.

### (3.2.3) Operation example 3

The UE 100 determines a cell for which a resource for random access channel (RACH) is not set as a cell to which transmission is to be stopped.

In other words, the UE 100 stops the UL transmission to a cell (regardless of type) for which RACH resource is not set. According to the present operation example, if a cell for which the RACH resource is set exists, the UE 100 executes the random access (RA) procedure again, whereby the possibility of keeping the transmission timing difference below the predetermined value can be increased.

### (3.2.4) Operation example 4

The UE 100 determines a cell with a small cell identification information value (Cell index) or a large cell identification information value as a cell to which the transmission is to be stopped.

In other words, the UE 100 stops the UL transmission to a cell with a small or large Cell index. According to the present operation example, it is possible to easily and reliably unify the cells to which the UL transmission is to be stopped between the radio access network (eNB) and the UE 100, thereby making it possible to prevent a target cell mismatch.

### (3.2.5) Operation example 5

The UE 100 determines a cell with a small system bandwidth as a cell to which the transmission is to be stopped. The system bandwidth is the total frequency bandwidth of the CCs transmitted to that cell by the UE 100.

In other words, the UE 100 stops the UL transmission to a cell with a smaller system bandwidth. According to the present operation example, the UL transmission can be continued in a cell that can implement a higher throughput.

The determination of the system bandwidth can be performed among cells in which the transmission timing difference exceeds the predetermined value, or can be performed based on the sum of all the bandwidths in the same TAG (Timing Advance Group) as that of the cell. Alternatively, the determination of the system bandwidth can be performed based on only the uplink (UL) band, only the downlink (DL) band, or both the UL band and the DL band.

Moreover, the determination of the system bandwidth can be limited to active cells, or the cells for which the UL transmission timing has been established (TA timer is active) .

### (3.2.6) Operation example 6

The UE 100 determines a cell with a small average throughput or a small average number of assigned resources, or a cell with a high HARQ (Hybrid Automatic Repeat Request) error rate as a cell to which the transmission is to be stopped.

In other words, the UE 100 stops the UL transmission to a cell with a small average throughput or a small average number of assigned resources, or a cell with a high HARQ error rate. According to the present operation example, it is possible to continue the communication in a cell that can implement a higher throughput.

### (3.2.7) Operation example 7

The UE 100 determines a cell set according to Licensed Associated Access (LAA), or the RAT that uses specific frequency such as a radio LAN as the target for stopping the transmission.

Furthermore, the LAA implements the radio communication according to the LTE in "unlicensed band" (specific frequency band), which is an unlicensed frequency band used by the radio LAN, Bluetooth (registered trademark), and the like. Specifically, when executing the CA or the DC, the CC transmitted to the SCell is set to an unlicensed band.

In other words, the UE 100 stops the UL transmission to the cell that is set according to the LAA. Because it is highly possible that the UL transmission opportunities in the cell set according to the LAA are more limited compared to that of the cell set in the licensed band, according to the present operation example, the UL transmission in the licensed band can be continued.

### (3.2.8) Operation example 8

The UE 100 determines a cell other than the PCell belonging to the MCG as a cell to which the transmission is to be stopped.

In other words, the UE 100 stops the UL transmission to another cell that is not the PCell. According to the present operation example, communication via the PCell, which is the most important cell for continuing communication, can be maintained. Moreover, according to the present operation example, if the transmission timing difference between the PCell and the PSCell exceeds the predetermined value, the UL transmission in the PSCell is stopped.

### (3.2.9) Operation example 9

The UE 100 determines a cell for which the UL transmission timing is early or late as a cell to which the transmission is to be stopped.

In other words, the UE 100 stops the UL transmission to a cell for which the UL transmission (transmission of the CC) is time-wise earlier or later. According to the present operation example, effect (interference) on the waveform of the subsequent UL radio signal can be reduced by stopping the UL transmission to the cell with earlier transmission timing, and effect (interference) on the waveform of the UL radio signal for which transmission has already started can be reduced by stopping the UL transmission to the cell with delayed transmission timing.

### (3.2.10) Operation example 10

The UE 100 determines a cell belonging to a cell group in which a low priority bearer is set as the cell to which the transmission is to be stopped.

In other words, the UE 100 can continue the UL transmission to a cell group in which a high priority bearer is set, and can stop the UL transmission to a cell group in which the low priority bearer is set.

For example, the UE 100 continues the UL transmission to a cell group in which SRB (Signalling Radio Bearer) or voice bearer is set. Furthermore, the priority can be identified based on QCI (QoS Class Identifier), LCP (Logical Channel Priority), or a radio bearer ID (RB-ID).

Furthermore, bearers for which data is not transmitted or received over a predetermined period can be excluded from the determination. Moreover, if bearers of the same priority are set in (associated with) different cells, the present operation need not be performed.

### (3.2.11) Operation example 11

The UE 100 determines, when a split bearer that utilizes resources of the MeNB 200 that forms a cell belonging to the MCG and the SeNB 300 that forms a cell belonging to the SCG is set, a cell in which the split bearer is set as a cell to which the transmission is to be stopped. More specifically, one of the cells in the cell group in which the split bearer is set is determined as a cell to which the transmission is to be stopped.

In other words, the UE 100 continues the UL transmission to the cells in which MCG bearer that is set only for the MCG, and SCG bearer that is set only for the SCG are set, and stops the UL transmission to the cells in which the split bearer is set.

In the split bearer, to use the MeNB and the SeNB resources in the Dual Connectivity, the radio protocol for the split bearer is deployed in both, the MeNB and the SeNB.

According to the present operation example, because the UL transmission to the cell in which the MCG bearer or the SCG bearer that utilizes only one eNB resource is set is prioritized over the UL transmission to the cell in which the split bearer is set, the possibility of the communication using the MCG bearer and the SCG bearer being continued can be increased. On the other hand, because both the MeNB and the SeNB resources are used in the split bearer, it is highly possible that communication can be continued even if the UL transmission is stopped.

### (3.2.12) Operation example 12

The UE 100 determines a cell for which communication is not being executed as a cell to which the transmission is to be stopped.

In other words, the UE 100 stops the UL transmission to a cell with communication execution frequency. According to the present operation example, the UL of a cell with high communication execution frequency or a cell in which communication is being executed can be prioritized, making it possible to avoid throughput degradation.

The state of "communication is not being executed" can be determined based on active cells, the number of the CCs, or a band (UL and / or DL), or can be determined based on a time period during which communication (data transmission / reception) is not executed (UL and / or DL).

The existing mechanism (for example, drx-InactivityTimer, onduration timer, or sCelldeactivationTimer) can be used to measure the time period.

### (3.2.13) Operation example 13

The UE 100 determines a cell specified by the network side (radio access network side) as a cell to which the transmission is to be stopped.

In other words, the UE 100 stops the UL transmission to the cell specified by the network. Such a cell can be notified from the network to the UE 100 in advance prior to the determination of the transmission timing difference. According to the present operation example, a cell to which the UL transmission is to be stopped can be determined via the network initiative.

### (3.2.14) Operation example 14

The UE 100 determines a cell that uses a specific frequency carrier as a cell to which the transmission is to be stopped.

In other words, the UE 100 stops the UL transmission to a cell that uses a specific frequency carrier (CC). For example, the UE 100 stops the UL transmission to a cell that uses a frequency carrier having significant effect on reception of DL signal or significant effect on the UL transmission to another cell such as leakage of a radio signal in the UE 100. Alternatively, the UL transmission to a cell that uses a frequency carrier near a band used by another mobile communication operator (operator) or another communication system can be stopped.

### (3.2.15) Operation example 15

The UE 100 determines a cell with a small TA (Timing Advance) value or a large TA value as a cell to which the transmission is to be stopped.

In other words, the UE 100 stops the UL transmission of a cell with a small TA value or a large TA value. For example, if the UL transmission in a macro cell with a wide coverage is to be maintained, the UL transmission to a cell with a smaller TA value, in other words, a cell with a small coverage such as a picocell is stopped. According to the present operation example, the UL transmission to a specific cell can be maintained depending on the magnitude of the coverage.

### (3.3) Method to stop uplink transmission

A method to stop radio link transmission, specifically, the uplink (UL) transmission performed by the UE 100 is explained below.

Upon determining to stop the UL transmission to a specific cell, for example, the UE 100 can stop the UL transmission by stopping the TA timer corresponding to the cell. Furthermore, rather than actually stopping the TA timer, the UE 100 can stop the UL transmission by considering that the TA timer has expired. The TA timer corresponding to the cell means the TA timer of the TAG to which the cell belongs.

Alternatively, the UE 100 can stop the UL transmission by performing reset (MAC reset) of MAC entity for a serving cell that corresponds to the cell to which the transmission is to be stopped.

Alternatively, the UE 100 can stop the UL transmission by releasing individual resources set for the serving cell. Specifically, the UE 100 releases resources such as CSI (Channel State Information) and SRS (Sounding Reference Signal) .

Alternatively, the UE 100 can also stop the UL transmission by deactivating the serving cell. The serving cell can be deactivated by considering that the conventionally defined sCellDeactivationTimer has expired.

As another method, the UE 100 can stop the UL transmission by detecting a radio link failure (RLF) in the serving cell (or the cell group or the MAC entity to which the serving cell belongs) . When using this method, it is assumed that the UL transmission to the PCell and the PSCell has stopped, and the UL transmission is stopped upon detecting the RLF.

The target to stop the transmission can be all ULs, or all ULs except PRACH (Physical Random Access Channel) . The reason for excluding the PRACH is that if the PRACH is set, then the UE 100 can receive a new TA, and because the transmission timing difference could be below the predetermined value.

(3.4) Operation after uplink transmission is stopped

An operation performed by the UE 100 after stopping the uplink (UL) transmission is explained below. As explained above, after stopping the UL transmission to a specific cell, the UE 100 can perform reconnection procedure for the corresponding eNB (MeNB 200 or SeNB 300).

Alternatively, the UE 100 can notify the corresponding eNB of detection of the RLF. When notifying of the detection of the RLF, the UE 100 can notify "UL transmission timing difference exceeded" as the cause of the RLF, or can use the existing cause (for example, RA problem due to the expiration of stop timer T313). Furthermore, the eNB can specify which cause is to be reported.

Alternatively, the UE 100 can trigger Contention based RA (Random Access) in a specific cell. When triggering such RA, the specific cell can be any of a cell that acted as a trigger for stopping the UL transmission, the PCell, the PSCell, or a cell in which the PUCCH is set.

### (3.5) Modifications

The operation performed by the UE 100 to stop the UL transmission is explained above; however, the operation can be further modified as explained below.

For example, the UE 100 can set a temporal hysteresis (Time-To-Trigger) until it is determined that the transmission timing difference has exceeded the predetermined value when determining the transmission timing difference, or can set hysteresis in the transmission timing difference itself. In other words, even if it is detected once that the transmission timing difference has exceeded the predetermined value, stopping of the UL transmission can be canceled if the transmission timing difference value returns to a value below the predetermined value within a predetermined time.

Furthermore, such information necessary to apply the hysteresis to the UE 100 can be notified from the eNB (for example, MeNB 200).

Moreover, the UE 100 can notify in advance the eNB (for example, MeNB 200) of capability that indicates whether or not the UE 100 supports the function that stops the UL transmission such as the one explained above. The notification can be transmitted for each UE 100, or can be transmitted for each combination (band combination) of frequency bands used by the UEs 100.

Furthermore, the UE 100 can be configured so as to notify such capability only when the UE 100 does not support asynchronous-type DC (Async DC). Furthermore, in the case of the Async DC, the transmission timing difference is specified to be below 500 µs.

### (4) Effects and advantages

According to the embodiments explained above, the following effects and advantages can be achieved. In other words, when the Dual Connectivity (DC) is applied, the UE 100 determines, based on the state of the cell of the MCG and the cell of the SCG, a cell to which the transmission is to be stopped if the transmission timing difference between the component carriers (CC) exceeds a predetermined value (35.21 µs).

Therefore, when the transmission timing difference of the CC between the MCG and the SCG exceeds the predetermined value, the UE 100 can stop the transmission of a radio link (UL) more appropriately.

The effects, advantages, and the like specific to each operation example are as explained in (3.2.1) to (3.2.15) .

### (5) Other embodiments

The present invention has been explained in detail using the above-mentioned embodiments; however, it is self-evident to a person skilled in the art that the present invention is not limited to the embodiments explained herein and that the embodiments can be modified or improved in various ways.

For example, in the above embodiment, the UE 100 determines, based on the transmission timing difference between the component carriers (CC), a cell to which the UL transmission is to be stopped, however, the UE 100 can stop DL reception based on the reception timing difference of a downlink CC transmitted from the MeNB 200 and the SeNB 300.

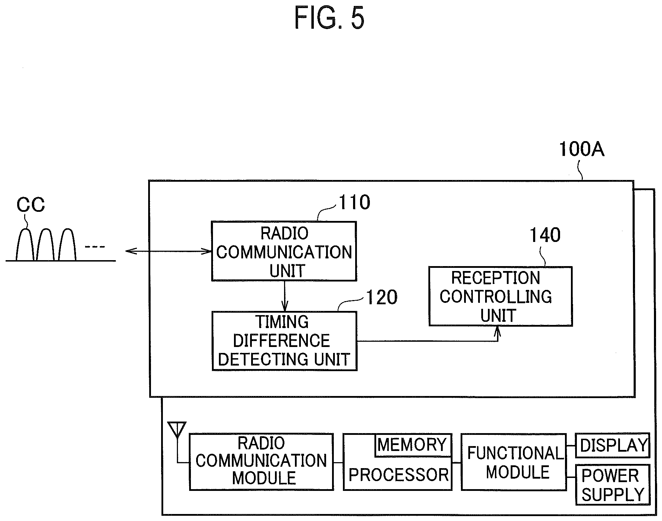

FIG. 5 is a functional block diagram of UE 100A according to the other embodiment of the present invention. As shown in FIG. 5, the UE 100A includes the radio communication unit 110, the timing difference detecting unit 120, and a reception controlling unit 140. An explanation is mainly given below about the portions that are different from the UE 100.

As explained above, the timing difference detecting unit 120 detects the reception timing difference (time difference) between the CCs received by the radio communication unit 110 from the MeNB 200 or the SeNB 300.

The reception controlling unit 140 controls downlink (DL) reception based on the reception timing difference between the CCs detected by the timing difference detecting unit 120. Specifically, when the reception timing difference detected by the timing difference detecting unit 120 exceeds a predetermined value (for example, 33 µs), the reception controlling unit 140 determines a cell from which the reception is to be stopped based on the state of a cell belonging to the MCG and a cell belonging to the SCG.

Furthermore, the reception controlling unit 140 can determine a cell from which the reception is to be stopped by performing an operation same as that of the transmission controlling unit 130 of the UE 100.

Moreover, an embodiment in which the UE 100 includes the transmission controlling unit 130, and an embodiment in which the UE 100A includes the reception controlling unit 140 are explained for the sake of convenience in this description, however, in the actual implementation of UE, the UE can include both the transmission controlling unit 130 and the reception controlling unit 140.

Furthermore, such UE 100 (UE 100A) can stop the DL reception if the transmission timing difference between the CCs in the uplink (UL) exceeds the predetermined value, or can stop the UL transmission if reception timing difference between the CCs in the downlink (DL) exceeds the predetermined value.

Moreover, in the above embodiment, even if a configuration in which the PCell 201 and the SCell 202 belong to the MCG is cited as an example, it is allowable that only the PCell 201 belongs to the MCG.

Furthermore, in the above embodiment, even if the master cell group and the secondary cell group in the Dual Connectivity are cited as an example, the configuration can be applied to other embodiments. For example, the same control can be applied between PUCCH groups in the CA. Furthermore, the order of processes in the sequences, flow charts, and the like in the embodiment explained above can be reshuffled as long as the order is kept consistent across sequences and flows.

Moreover, the terminology explained in the present description and / or the terminology necessary for understanding the present description can be replaced with the terminology having the same or similar meanings. For example, terms "channel" and / or "symbol" can be replaced with the term "signal" . Moreover, the term "signal" can be replaced with the term "message". Furthermore, the terms "system" and "network" can be used interchangeably.

Furthermore, the parameters and the like explained above can be represented by absolute values, can be expressed as relative values with respect to the predetermined values, or can be represented by any other corresponding information. For example, a radio resource can be indicated by an index.

The MeNB200, SeNB300 (a base station) can accommodate one or more (for example, three) cells (also called sectors). When the base station accommodates more than one cells, the entire coverage area of the base station can be divided into a plurality of smaller areas, and each of the smaller areas can provide communication services via a base station subsystem (for example, small type indoor base station RRH: Remote Radio Head).

The term "cell" or "sector" refers to a base station that executes communication service in this coverage and / or a part or the entire of the coverage area of the base station subsystem. Furthermore, the terms "base station", "eNB", "cell", and "sector" can be used interchangeably in the present description. The base station is also referred to as a fixed station, Node B, eNodeB (eNB), an access point, a femto cell, a small cell, and the like.

The UE100, 100A is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, depending on a person skilled in the art.

The phrase "based on" used in the present description does not mean "based only on" unless specified particularly. It can also be interpreted that the phrase "based on" means both "based only on" and "based at least on".

Furthermore, the terms "including", "comprising", and various forms thereof are intended to be inclusive, similar to "equipped with". Furthermore, the term "or" used in the present description or in the claims does not intend to indicate an exclusive disjunction.

Any reference to an element using a designation such as "first", "second", and the like used in the present description generally does not limit the amount or order of those elements. Such designations can be used in the present description as a convenient way to distinguish between two or more elements. Thus, the reference to the first and second elements does not imply that only two elements can be adopted, or that the first element must precede the second element in some or the other manner.

Throughout the present description, for example, during translation, if articles such as a, an, and the in English are added, these articles shall include plurality, unless it is clearly indicated that it is not so according to the context.

The present invention can be expressed as below. According to one aspect of the present invention, a radio communication device (for example, UE 100) that performs radio communication by using a plurality of component carriers (CC) via a cell belonging to a master cell group and a cell belonging to a secondary cell group includes a timing difference detecting unit (timing difference detecting unit 120) that detects a transmission timing difference between the plurality of the component carriers; and a transmission controlling unit (transmission controlling unit 130) that determines, based on states of the cell belonging to the master cell group and the cell belonging to the secondary cell group, a cell to which transmission is to be stopped if the transmission timing difference detected by the timing difference detecting unit exceeds a predetermined value, and stops transmission of a radio link to the determined cell.

In the above aspect of the present invention, the transmission controlling unit can determine a secondary cell belonging to the master cell group and / or a secondary cell belonging to the secondary cell group as a cell to which transmission is to be stopped.

In the above aspect of the present invention, the transmission controlling unit can determine a secondary cell in which an uplink control channel is not set as a cell to which transmission is to be stopped.

In the above aspect of the present invention, the transmission controlling unit can determine a cell other than a primary cell belonging to the master cell group as a cell to which transmission is to be stopped.

In the above aspect of the present invention, the transmission controlling unit can determine, when a split bearer that utilizes resources of a master radio base station that forms a cell belonging to the master cell group and a secondary radio base station that forms a cell belonging to the secondary cell group is set, a cell from a cell group which the split bearer is set as a cell to which transmission is to be stopped.

According to another aspect of the present invention, a radio communication method that performs radio communication by using a plurality of component carriers via a cell belonging to a master cell group and a cell belonging to a secondary cell group includes detecting including a radio communication device detecting a transmission timing difference between the plurality of the component carriers; determining including the radio communication device determining, based on states of the cell belonging to the master cell group and the cell belonging to the secondary cell group, a cell to which transmission is to be stopped when the transmission timing difference detected at the detecting exceeds a predetermined value; and stopping including the radio communication device stopping transmission of a radio link to the determined cell.

As described above, the details of the present invention have been disclosed by using the embodiment of the present invention. However, the description and drawings which constitute part of this disclosure should not be interpreted so as to limit the present invention. From this disclosure, various alternative embodiments, examples, and operation techniques will be easily apparent to a person skilled in the art.

The entire contents of Japanese Patent Application 2016-019794 (filed on February 4, 2016) are incorporated in the description of the present application by reference.

### INDUSTRIAL APPLICABILITY

According to the radio communication device and the radio communication method, the transmission of a radio link can be stopped more appropriately if the transmission timing difference of the component carrier (CC) between the MCG and the SCG exceeds a predetermined value, when the Dual Connectivity (DC) is applied.

### EXPLANATION OF REFERENCE NUMERALS

- 10: radio communication system
- 100, 100A: UE
- 110: radio communication unit
- 120: timing difference detecting unit
- 130: transmission controlling unit
- 140: reception controlling unit
- 200: MeNB
- 201: PCell
- 202: SCell
- 210: radio communication unit
- 220: timing difference detecting unit
- 230: transmission controlling unit
- 300: SeNB
- 301: PSCell
- 302: SCell

## Claims

1. A radio communication device that performs radio communication by using a plurality of component carriers via a cell belonging to a master cell group and a cell belonging to a secondary cell group, the radio communication device comprising:
a timing difference detecting unit that detects a transmission timing difference between the plurality of the component carriers; and
a transmission controlling unit that determines, based on states of the cell belonging to the master cell group and the cell belonging to the secondary cell group, a cell to which transmission is to be stopped if the transmission timing difference detected by the timing difference detecting unit exceeds a predetermined value, and stops transmission of a radio link to the determined cell.

2. The radio communication device as claimed in Claim 1, wherein the transmission controlling unit determines a secondary cell belonging to the master cell group and / or a secondary cell belonging to the secondary cell group as a cell to which transmission is to be stopped.

3. The radio communication device as claimed in Claim 1, wherein the transmission controlling unit determines a secondary cell in which an uplink control channel is not set as a cell to which transmission is to be stopped.

4. The radio communication device as claimed in Claim 1, wherein the transmission controlling unit determines a cell other than a primary cell belonging to the master cell group as a cell to which transmission is to be stopped.

5. The radio communication device as claimed in Claim 1, wherein the transmission controlling unit determines, when a split bearer that utilizes resources of a master radio base station that forms a cell belonging to the master cell group and a secondary radio base station that forms a cell belonging to the secondary cell group is set, a cell from a cell group which the split bearer is set as a cell to which transmission is to be stopped.

6. A radio communication method that performs radio communication by using a plurality of component carriers via a cell belonging to a master cell group and a cell belonging to a secondary cell group, the radio communication method comprising:
detecting including a radio communication device detecting a transmission timing difference between the plurality of the component carriers;
determining including the radio communication device determining, based on states of the cell belonging to the master cell group and the cell belonging to the secondary cell group, a cell to which transmission is to be stopped when the transmission timing difference detected at the detecting exceeds a predetermined value; and
stopping including the radio communication device stopping transmission of a radio link to the determined cell.
